# EUROPEAN PATENT APPLICATION

(11) **EP 4 656 807 A1**
(43) Date of publication of application: **03.12.2025**
(21) Application number: 24778564.5
(22) Date of filing: 17.01.2024
(51) Int. Cl.: E02F 9/20

(54) **DRIVE SYSTEM FOR ELECTRIC CONSTRUCTION MACHINE**

(30) Priority: 27.03.2023 JP 2023050671
(71) Applicant: Hitachi Construction Machinery Tierra Co., Ltd., Shiga 528-0061, (JP)
(72) Inventor: MORI, Kazushige, Koka-shi, Shiga 528-0061 (JP); KAWAGUCHI, Hiroshi, Koka-shi, Shiga 528-0061 (JP); TANIGUCHI, Tsukasa, Koka-shi, Shiga 528-0061 (JP); INOUE, Ryoya, Koka-shi, Shiga 528-0061 (JP)
(74) Representative: Manitz Finsterwald Patent- und Rechtsanwaltspartnerschaft mbB
(86) International application number: PCT/JP2024/001176
(87) International publication number: WO 2024/202418

(57) **Abstract**

An object of the present invention is to provide a drive system of an electrically driven construction machine that can suppress decrease in the stored power level of a power storage device in transition to automatic stop control when the stored power level is low and allow the stored power level of the power storage device to last for a long time. A controller of the drive system controls an electrically driven motor 1 to stop revolution of the electrically driven motor when a predetermined time has elapsed as the duration time of a state in which none of a plurality of operation devices is operated. Further, when the stored power level of the power storage device is equal to or lower than a first threshold, the controller sets the predetermined time shorter than that when the stored power level is higher than the first threshold.

## Description

### Technical Field

The present invention relates to a drive system of an electrically driven construction machine that stops revolution of an electrically driven motor when operation has been absent for a predetermined time.

### Background Art

Many construction machines such as hydraulic excavators employ a diesel engine as a power source, and execute work by actuating a hydraulic actuator by a hydraulic fluid supplied from a hydraulic pump joined to the diesel engine. An instruction of operation of the hydraulic actuator is made by lever operation of an operation lever device. In a drive system of such a construction machine, for example, as described in Patent Document 1, automatic stop control to stop revolution of the engine when the lever operation of the operation lever device has been absent for a predetermined time is employed.

Meanwhile, in recent years, in terms of improvement in fuel consumption, improvement in exhaust gas characteristics, reduction in noise, and the like, a work machine such as an electrically driven hydraulic excavator that is equipped with a power storage device (battery) as a drive source and drives an electrically driven motor by power of the power storage device to drive a hydraulic pump has been developed and been put into practical use.

In such an electrically driven construction machine in which the drive source is the power storage device, the time for charging the power storage device is longer than the time for feeding a fuel in a general construction machine. Hence, it is important to allow the stored power level of the power storage device to last for a long time. Patent Document 2 discloses a technology of executing automatic idle control to lower the revolution speed of an electrically driven motor when lever operation of an operation lever device has been absent for a predetermined time in order to suppress the power consumption.

### Prior Art Document

### Patent Documents

Patent Document 1: JP-2003-307142-A
Patent Document 2: JP-2010-121328-A

### Summary of the Invention

### Problem to be Solved by the Invention

However, in the invention described in Patent Document 2, the predetermined time in transition to the automatic idle control is constant, and it is impossible to suppress the power consumption under a situation in which lever operation is not being executed until the transition to the automatic idle control is made. Thus, there is room for improvement in allowing the stored power level of the power storage device to last for a long time. Even if the automatic stop control described in Patent Document 1 is applied instead of the automatic idle control of the electrically driven construction machine described in Patent Document 2, it is impossible to suppress the power consumption under a situation in which lever operation is not being executed until the transition to the automatic stop control is made, and there is room for improvement in allowing the stored power level of the power storage device to last for a long time.

An object of the present invention is to provide a drive system of an electrically driven construction machine that can suppress decrease in the stored power level of a power storage device in transition to automatic stop control when the stored power level is low and allow the stored power level of the power storage device to last for a long time.

### Means for Solving the Problem

In order to achieve the above-described object, the present invention provides the following drive system of an electrically driven construction machine. The drive system includes an electrically driven motor, a hydraulic pump driven by the electrically driven motor, a plurality of actuators driven by a hydraulic fluid delivered from the hydraulic pump, a plurality of operation devices for operating the plurality of actuators, a power storage device that gives power to the electrically driven motor, and a controller that controls the revolution speed of the electrically driven motor, the controller executing automatic stop control to stop revolution of the electrically driven motor when a predetermined time has elapsed as a duration time of a state in which none of the plurality of operation devices is operated. The controller is configured to, when a stored power level of the power storage device is equal to or lower than a first threshold, set the predetermined time shorter than the predetermined time when the stored power level is higher than the first threshold.

As described above, in the present invention, when the stored power level of the power storage device is equal to or lower than the first threshold, the predetermined time is set shorter than that when the stored power level is higher than the first threshold. Hence, the power consumption amount of the power storage device during the predetermined time is suppressed by an amount corresponding to the shortening of the predetermined time. Thus, decrease in the stored power level of the power storage device in transition to the automatic stop control is suppressed when the stored power level is low, and the stored power level of the power storage device can be allowed to last for a long time.

### Advantages of the Invention

According to the present invention, decrease in the stored power level of the power storage device in transition to the automatic stop control is suppressed when the stored power level is low. Thus, it is possible to allow the stored power level of the power storage device to last for a long time and operate the construction machine for a long time with one time of charging.

### Brief Description of the Drawings

[Fig. 1] Fig. 1 is a side view of an electrically driven construction machine including a drive system in a first embodiment of the present invention.
[Fig. 2] Fig. 2 is a diagram depicting the drive system of an electrically driven hydraulic excavator according to the first embodiment of the present invention.
[Fig. 3] Fig. 3 is a functional block diagram depicting details of contents of processing executed by a controller.
[Fig. 4] Fig. 4 is a diagram depicting a relation between an instruction signal from a revolution speed dial and a reference revolution speed, set in a reference revolution speed computation table.
[Fig. 5] Fig. 5 is a diagram depicting a relation between a stored power level and a predetermined time, set in a predetermined time computation table.
[Fig. 6] Fig. 6 is a flowchart depicting a flow of processing executed by the controller.
[Fig. 7] Fig. 7 is a diagram depicting another example of the relation between the stored power level and the predetermined time, set in the predetermined time computation table.
[Fig. 8] Fig. 8 is a diagram depicting a drive system of an electrically driven hydraulic excavator according to a second embodiment of the present invention, and is a diagram depicting a case in which an electrically driven motor is driven by power of a power storage device.
[Fig. 9] Fig. 9 is a diagram depicting the drive system of the electrically driven hydraulic excavator according to the second embodiment of the present invention, and is a diagram depicting a case in which the electrically driven motor is driven while the power storage device is charged by power of an external power supply.

### Modes for Carrying Out the Invention

Embodiments of the present invention are described in detail below on the basis of the drawings.

### <First Embodiment>

A first embodiment of the present invention is described.

### -Construction Machine-

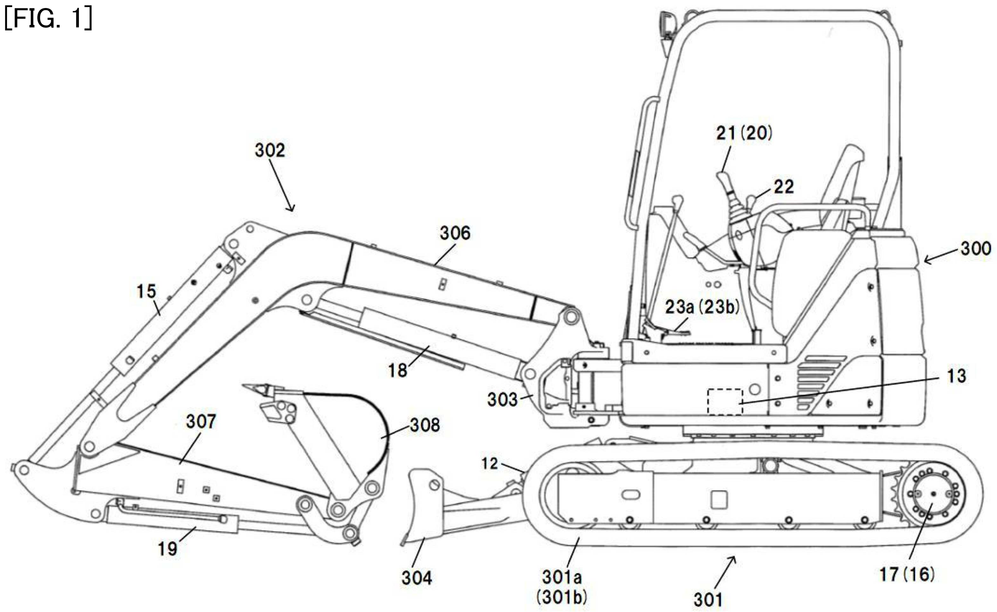

Fig. 1 is a side view of an electrically driven construction machine including a drive system in the first embodiment of the present invention. In the present embodiment, the electrically driven construction machine is a hydraulic excavator of a crawler type that is a representative example of construction machines.

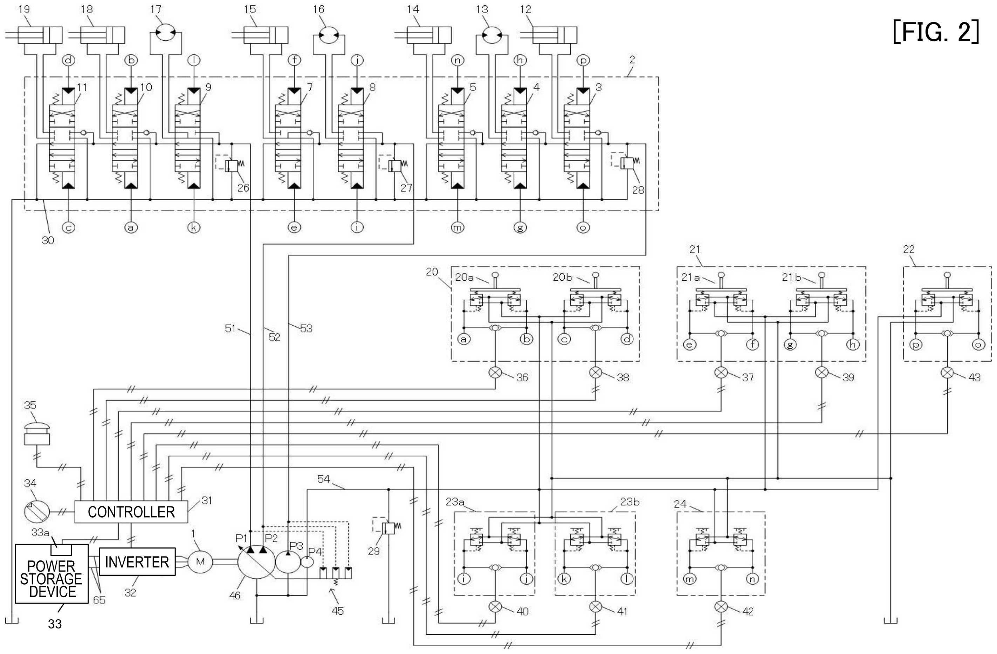

In Fig. 1, the electrically driven hydraulic excavator in the present embodiment includes an upper swing structure 300, a lower track structure 301, and a front work implement 302. The upper swing structure 300 can be swung relative to the lower track structure 301 by an operation lever device 21 being operated to rotate a swing motor 13. A swing post 303 is attached to a front portion of the upper swing structure 300. The front work implement 302 is vertically movably attached to the swing post 303. The front work implement 302 includes a boom 306, an arm 307, and a bucket 308. By the operation lever devices 20 and 21 being operated to extend or retract a boom cylinder 18, an arm cylinder 15, and a bucket cylinder 19, the boom 306, the arm 307, and the bucket 308 are driven, and the posture of the front work implement 302 changes. The lower track structure 301 includes left and right crawler-type track devices 301a and 301b. By operation pedal devices 23a and 23b being operated to rotate left and right travelling motors 17 and 16, the track devices 301a and 301b are driven to execute travelling. A blade 304 is attached to a center frame between the left and right crawler-type track devices 301a and 301b. The blade 304 is caused to make vertical actions by an operation lever device 22 being operated to extend or retract a blade cylinder 12. Moreover, the swing post 303 is caused to pivot leftward and rightward by an operation pedal device 24 (see Fig. 2) being operated to extend or retract a swing cylinder 14 (see Fig. 2).

### -Drive System-

Fig. 2 is a diagram depicting the drive system of the electrically driven hydraulic excavator according to the present embodiment.

In Fig. 2, the drive system of the present embodiment includes an electrically driven motor 1, a first hydraulic pump P1, a second hydraulic pump P2, and a third hydraulic pump P3 that are main pumps driven by the electrically driven motor 1, and a pilot pump P4 that operates in association with the main pumps P1, P2, and P3 and is driven by the electrically driven motor 1. The drive system also includes the above-described left and right travelling motors 17 and 16, boom cylinder 18, bucket cylinder 19, arm cylinder 15, blade cylinder 12, swing motor 13, and swing cylinder 14 that are a plurality of actuators driven by a hydraulic fluid delivered from the first, second, or third hydraulic pump P1, P2, or P3, and a plurality of directional control valves 3 to 5 and 7 to 11 that control the flow of the hydraulic fluid supplied from the first, second, and third hydraulic pumps P1, P2, and P3 to the plurality of actuators 12 to 19. The drive system also includes the above-described operation lever devices 20, 21, and 22 and operation pedal devices 23a, 23b, and 24 that are a plurality of operation devices for performing switching among the plurality of directional control valves 3 to 5 and 7 to 11 to operate the plurality of actuators 12 to 19, and a pilot relief valve 29 that is connected to a hydraulic fluid supply line 54 of the pilot pump P4 and keeps the pressure of the pilot pump P4 constant.

The first hydraulic pump P1 and the second hydraulic pump P2 are hydraulic pumps of a variable displacement type, and are formed by a hydraulic pump 46 of a split flow type. The third hydraulic pump P3 is a hydraulic pump of a fixed displacement type. The hydraulic pump 46 of the split flow type includes a regulator 45 that executes horsepower limiting control such that the total absorption horsepower of the first, second, and third hydraulic pumps P1, P2, and P3 does not exceed the maximum horsepower.

The directional control valves 3 to 5 and 7 to 11 are directional control valves of an open center type disposed in a control valve 2. The directional control valves 9, 10, and 11 are connected to the first hydraulic pump P1 through a hydraulic fluid supply line 51, and each control the flow of the hydraulic fluid supplied from the first hydraulic pump P1 to the corresponding actuator 17, 18, or 19. The directional control valves 7 and 8 are connected to the second hydraulic pump P2 through a hydraulic fluid supply line 52, and each control the flow of the hydraulic fluid supplied from the second hydraulic pump P2 to the corresponding actuator 15 or 16. The directional control valves 3, 4, and 5 are connected to the third hydraulic pump P3 through a hydraulic fluid supply line 53, and each control the flow of the hydraulic fluid supplied from the third hydraulic pump P3 to the corresponding actuator 12, 13, or 14. Main relief valves 26, 27, and 28 that limit the delivery pressure of the first, second, and third hydraulic pumps P1, P2, and P3, respectively, are connected to the hydraulic fluid supply lines 51, 52, and 53.

The operation lever devices 20, 21, and 22 and the operation pedal devices 23a, 23b, and 24 use the hydraulic fluid supply line 54 of the pilot pump P4 as a pilot hydraulic fluid source to generate operation pressures a, b, c, d, e, f, g, h, i, j, k, l, m, n, o, and p for performing switching among the directional control valves 3 to 5 and 7 to 11.

Operation levers of the operation lever devices 20 and 21 can be omnidirectionally operated on the basis of an upward-downward direction and a left-right direction. The operation lever device 20 functions as an operation lever device 20a for the boom and an operation lever device 20b for the bucket according to the operation direction of the operation lever. The operation lever device 21 functions as an operation lever device 21a for the arm and an operation lever device 21b for swing according to the operation direction of the operation lever. The operation lever device 22 is for the blade. The operation pedal device 23a is for rightward travelling. The operation pedal device 23b is for leftward travelling. The operation pedal device 24 is for swing.

Further, the drive system of the present embodiment includes a controller 31 that controls the revolution speed of the electrically driven motor 1, an inverter 32 that operates on the basis of a revolution speed command output from the controller 31, and a power storage device 33 that is connected to the inverter 32 through a DC power supply line 65 and supplies power to the electrically driven motor 1. The drive system also includes a revolution speed dial 34 to make an instruction regarding a reference revolution speed Nr of the electrically driven motor 1 and an automatic stop switch 35 to switch ON or OFF automatic stop control. The drive system also includes a pressure sensor 36 that senses the operation pressures (boom operation pressures) a and b of the operation lever device 20a, a pressure sensor 38 that senses the operation pressures (bucket operation pressures) c and d of the operation lever device 20b, a pressure sensor 37 that senses the operation pressures (arm operation pressures) e and f of the operation lever device 21a, and a pressure sensor 39 that senses the operation pressures (swing operation pressures) g and h of the operation lever device 21b. The drive system also includes a pressure sensor 40 that senses the operation pressures (travelling right operation pressures) i and j of the operation pedal device 23a, a pressure sensor 41 that senses the operation pressures (travelling left operation pressures) k and l of the operation pedal device 23b, a pressure sensor 42 that senses the operation pressures (swing operation pressures) m and n of the operation pedal device 24, and a pressure sensor 43 that senses the operation pressures (blade operation pressures) o and p of the operation lever device 22.

The power storage device 33 includes a power storage controller 33a. The power storage controller 33a executes input/output control of power of the power storage device 33, and calculates a stored power level and outputs stored power level information to the controller 31. The stored power level may be calculated by a section other than the power storage controller 33a in the power storage device 33 and be output to the controller 31. Moreover, the stored power level may be represented by the state of charge (SOC) or may be represented by another parameter such as a voltage.

To the controller 31, an instruction signal from the revolution speed dial 34, an automatic stop control ON signal from the automatic stop switch 35, sensing signals from the pressure sensors 36, 37, 38, 39, 40, 41, 42, and 43, and the stored power level information of the power storage device 33 are input. The controller 31 controls the revolution speed of the electrically driven motor 1 by executing predetermined computation processing and outputting the revolution speed command to the inverter 32.

The controller 31 is configured by a computer including a processing device such as a CPU (Central Processing Unit), a non-volatile memory such as a ROM (Read Only Memory), a flash memory, or a hard disk drive, a volatile memory referred to as what is called a RAM (Random Access Memory), an input/output interface, and other peripheral circuits. These pieces of hardware cooperate to operate software and implement a plurality of functions. The controller 31 may be configured by one computer or may be configured by a plurality of computers.

Programs that can execute various computations, various thresholds, data tables, and the like are stored in the non-volatile memory. The non-volatile memory is a storage medium (storage device) that can read programs that implement functions of the present embodiment. The volatile memory is a storage medium (storage device) that temporarily stores a computation result obtained by the processing device and a signal input from the input/output interface. The processing device is a device that loads the program stored in the non-volatile memory into the volatile memory and executes computation, and executes predetermined computation processing for data taken in from the input/output interface, the non-volatile memory, and the volatile memory in accordance with the program. An input section of the input/output interface converts a signal input from various devices (pressure sensors 36 to 43 and the like) to data that can be computed by the processing device. Further, an output section of the input/output interface generates a signal for output according to a computation result in the processing device, and outputs the signal to various devices (inverter 32 and the like).

Contents of processing by the controller 31 are described below.

A schematic function of the controller 31 is as follows. Operation information of the plurality of operation devices 20, 21, 22, 23a, 23b, and 24 is input to the controller 31. The controller 31 determines whether any of the plurality of operation devices 20, 21, 22, 23a, 23b, and 24 is being operated, on the basis of this operation information. When any of the plurality of operation devices 20, 21, 22, 23a, 23b, and 24 is being operated, the controller 31 determines that the operation devices 20 to 24 are not in a non-operated state. In this case, the controller 31 drives the electrically driven motor 1 at a predetermined revolution speed. When none of the plurality of operation devices 20, 21, 22, 23a, 23b, and 24 is being operated, the controller 31 determines that the operation devices 20 to 24 are in the non-operated state. Then, the controller 31 determines whether or not a predetermined time (delay time) TD has elapsed with the non-operated state kept. When determining that the predetermined time TD has elapsed with the non-operated state kept, the controller 31 lowers the revolution speed of the electrically driven motor 1 from the predetermined revolution speed to 0 (zero). In this manner, the controller 31 according to the present embodiment executes the automatic stop control to stop the revolution of the electrically driven motor 1 when an automatic stop condition is satisfied (when the non-operated state has been kept for the predetermined time TD).

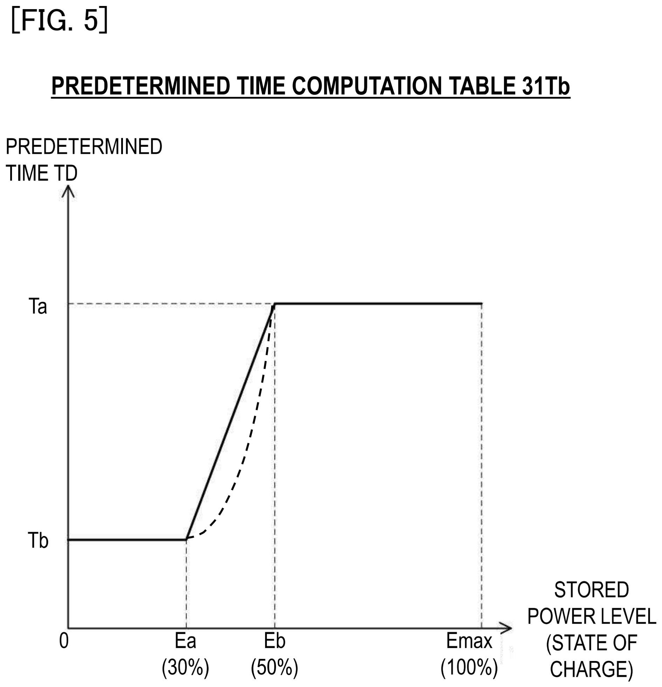

Moreover, as a characteristic function of the controller 31, the stored power level information of the power storage device 33 is input to the controller 31, and the controller 31 computes the predetermined time TD on the basis of the stored power level of the stored power level information. When the stored power level is equal to or lower than a first threshold Ea (see Fig. 5), the controller 31 sets the above-described predetermined time TD shorter than that when the stored power level is higher than the first threshold Ea.

Further, in the present embodiment, the controller 31 computes the predetermined time TD that continuously decreases, during decrease in the stored power level from a second threshold Eb (see Fig. 5) larger than the first threshold Ea to the first threshold Ea.

Details of the contents of the processing by the controller 31 are described below.

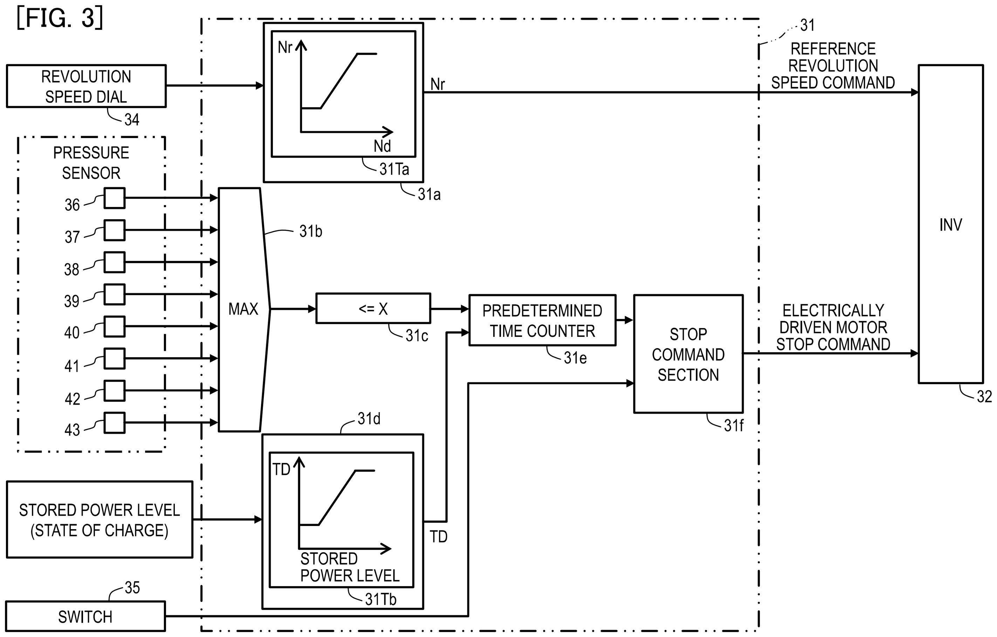

Fig. 3 is a functional block diagram depicting the details of the contents of the processing executed by the controller 31.

In Fig. 3, the controller 31 has respective functions of a reference revolution speed command section 31a, a maximum value selection section 31b, a determination section 31c, a predetermined time computation section 31d, a predetermined time counter 31e, and a stop command section 31f.

The reference revolution speed command section 31a refers to a reference revolution speed computation table 31Ta stored in the non-volatile memory, and computes the reference revolution speed Nr of the electrically driven motor 1 corresponding to an instruction signal Nd from the revolution speed dial 34.

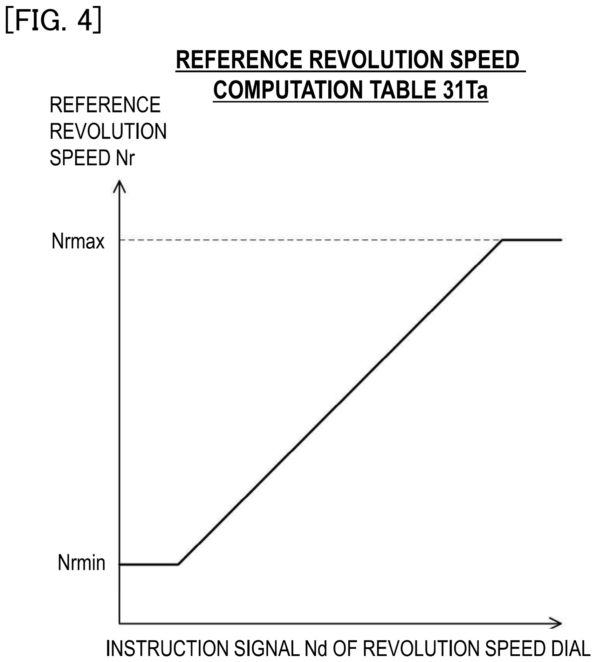

Fig. 4 is a diagram depicting a relation between the instruction signal Nd from the revolution speed dial 34 and the reference revolution speed Nr, set in the reference revolution speed computation table 31Ta. In the reference revolution speed computation table 31Ta, the relation between the instruction signal Nd from the revolution speed dial 34 and the reference revolution speed Nr is set such that the reference revolution speed Nr increases as the instruction signal Nd from the revolution speed dial 34 becomes larger. A minimum value Nrmin of the reference revolution speed Nr is, for example, 1200 rpm, and a maximum value Nrmax is, for example, 2000 rpm. The reference revolution speed command section 31a depicted in Fig. 3 outputs a command according to the computed reference revolution speed Nr (reference revolution speed command) to the inverter 32.

The sensing signals of the pressure sensors 36 to 43 are input to the maximum value selection section 31b, and the maximum value selection section 31b selects the maximum value among the boom operation pressures a and b, the bucket operation pressures c and d, the arm operation pressures e and f, the swing operation pressures g and h, the travelling right operation pressures i and j, the travelling left operation pressures k and l, the swing operation pressures m and n, and the blade operation pressures o and p indicated by the respective sensing signals. The selected maximum value of the operation pressure is introduced to the determination section 31c.

The determination section 31c determines whether the maximum value of the operation pressure is equal to or smaller than a determination pressure (pressure threshold) XMPa (for example, 0.5 MPa; maximum value of the operation pressure with which the directional control valves 3, 4, 5, 7, 8, 9, 10, and 11 do not start to move) set in advance. When the maximum value of the operation pressure is not equal to or smaller than XMPa, the determination section 31c determines that any of the operation levers and the operation pedals of the operation devices 20 to 24 is being operated. When the maximum value of the operation pressure is equal to or smaller than XMPa, the determination section 31c determines that none of the operation levers and the operation pedals of the operation devices 20 to 24 is being operated and the operation levers and the operation pedals are all in neutral. The determination section 31c outputs a non-operation signal when determining that none of the operation levers and the operation pedals of the operation devices 20 to 24 is being operated and the operation levers and the operation pedals are all in neutral. The non-operation signal is introduced to the predetermined time counter 31e.

The stored power level information of the power storage device 33 is input from the power storage controller 33a to the predetermined time computation section 31d. The predetermined time computation section 31d refers to a predetermined time computation table 31Tb stored in the non-volatile memory, and computes the predetermined time TD corresponding to the stored power level. The predetermined time TD computed by the predetermined time computation section 31d is introduced to the predetermined time counter 31e.

Fig. 5 is a diagram depicting a relation between the stored power level and the predetermined time TD, set in the predetermined time computation table 31Tb. In the predetermined time computation table 31Tb, the relation between the stored power level and the predetermined time TD is set such that the predetermined time TD is computed as follows. During decrease in the stored power level from a maximum stored power level Emax to the second threshold Eb larger than the first threshold Ea, the predetermined time TD is constant at a first time Ta. During decrease in the stored power level from the second threshold Eb to the first threshold Ea, the predetermined time TD decreases from the first time Ta to a second time Tb, for example, linearly. When the stored power level further decreases from the first threshold Ea, the predetermined time TD is constant at the second time Tb. During decrease in the stored power level from the second threshold Eb to the first threshold Ea, the predetermined time TD may decrease in a curved manner as indicated by a thick dashed line in Fig. 5.

The first threshold Ea is a stored power level with which an effect of suppressing the power consumption is obtained due to shortening of the predetermined time TD of the automatic stop control. The second threshold Eb is a stored power level that minimizes an influence of change in the predetermined time TD on the operability when the predetermined time TD is decreased from the first time Ta to the second time Tb.

In the case in which the stored power level is represented by the state of charge (charging status) SOC, the maximum stored power level Emax is 100%. The first threshold Ea is, for example, 30%, and the second threshold Eb is, for example, 50%. Moreover, in the case in which the stored power level is represented by the stored power voltage, the maximum stored power level Emax is, for example, 380 V. The first threshold Ea is, for example, 345 V, and the second threshold Eb is, for example, 355 V.

The first time Ta is a predetermined time normally used in the automatic stop control, and is, for example, four to five seconds. The second time Tb is a predetermined time with which the effect of suppressing the power consumption is obtained through the shortening of the predetermined time TD while transition to the automatic stop control is made when the stored power level is equal to or lower than the above-described first threshold Ea, and is, for example, one to two seconds.

By setting the relation between the stored power level and the predetermined time TD in the predetermined time computation table 31Tb in this manner, when the stored power level is equal to or lower than the first threshold Ea, the controller 31 computes the second time Tb shorter than the predetermined time TD when the stored power level is higher than the first threshold Ea. Further, in the present embodiment, the controller 31 computes the predetermined time TD that continuously decreases, during decrease in the stored power level from the second threshold Eb larger than the first threshold Ea to the first threshold Ea.

With reference back to Fig. 3, the predetermined time counter 31e incorporates a timer. When the non-operation signal is input thereto from the determination section 31c, the predetermined time counter 31e starts a timer count (hereinafter, referred to simply as a count) of an elapsed time T after the input of the non-operation signal. Moreover, the predetermined time counter 31e continues the count of the elapsed time T while the non-operation signal is output, and, when the counted elapsed time T coincides with the predetermined time TD computed in the predetermined time computation section 31d on the basis of the stored power level and the predetermined time TD has elapsed, outputs a predetermined time count completion signal. This predetermined time count completion signal is introduced to the stop command section 31f. On the other hand, when the output of the non-operation signal from the determination section 31c is stopped before the predetermined time TD output from the predetermined time computation section 31d elapses, the predetermined time counter 31e resets the count.

As described above, when the predetermined time TD computed by the predetermined time computation section 31d has elapsed after all of the operation levers and the operation pedals have become the neutral state, the predetermined time count completion signal is introduced from the predetermined time counter 31e to the stop command section 31f. Further, when the automatic stop switch 35 is ON, the automatic stop control ON signal is introduced from the automatic stop switch 35 to the stop command section 31f.

When receiving both the predetermined time count completion signal and the automatic stop control ON signal, the stop command section 31f determines that the automatic stop condition is satisfied. When the automatic stop condition is satisfied, the stop command section 31f outputs a command for stopping the electrically driven motor 1 (electrically driven motor stop command) to the inverter 32. When at least either the predetermined time count completion signal or the automatic stop control ON signal has not been received, the stop command section 31f determines that the automatic stop condition is not satisfied. When the automatic stop condition is not satisfied, the stop command section 31f does not output the electrically driven motor stop command to the inverter 32.

As described above, when the automatic stop condition is not satisfied (when any of the operation levers and the operation pedals is being operated, the predetermined time TD has not yet elapsed, or the automatic stop switch 35 is OFF), the controller 31 generates the reference revolution speed command on the basis of the reference revolution speed Nr computed by the reference revolution speed command section 31a as a target revolution speed of the electrically driven motor 1, and outputs the reference revolution speed command to the inverter 32.

On the other hand, when the automatic stop condition is satisfied (when the operation levers and the operation pedals are all in neutral, the predetermined time TD has elapsed, and the automatic stop switch 35 is ON), the controller 31 generates the electrically driven motor stop command to stop the revolution of the electrically driven motor 1, and outputs the electrically driven motor stop command to the inverter 32.

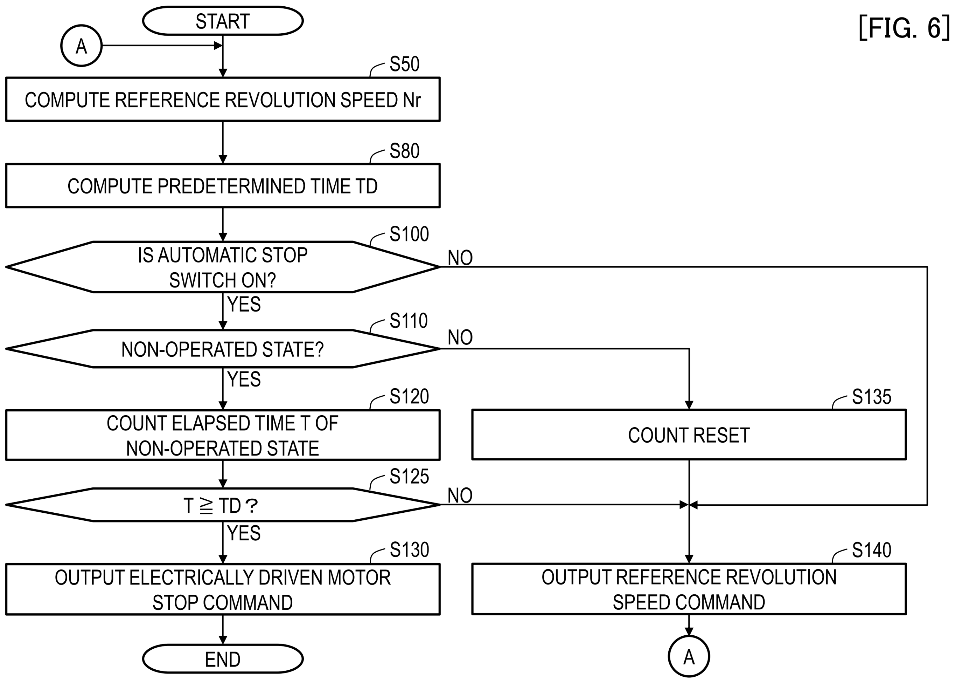

Fig. 6 is a flowchart depicting the flow of processing executed by the controller 31 configured as described above. Hereinafter, the operation levers of the operation lever devices 20, 21, and 22 and the operation pedals of the operation pedal devices 23a, 23b, and 24 are referred to as "operation levers/pedals 20 to 24." For example, the control flow depicted in Fig. 6 is started in response to motor start operation executed by a starter switch (not depicted) of the hydraulic excavator, and is repeatedly executed at a predetermined control cycle. The starter switch is an operation switch for making an instruction of start, stop, and the like of the electrically driven motor 1, and is operated by an operator. When the start operation is executed by the starter switch while the electrically driven motor 1 is in a stopped state, the electrically driven motor 1 is started, and the revolution speed of the electrically driven motor 1 rises to the reference revolution speed Nr. When stop operation is executed by the starter switch while the electrically driven motor 1 is revolving at the reference revolution speed Nr, the revolution speed of the electrically driven motor 1 decreases from the reference revolution speed Nr, and the electrically driven motor 1 is stopped.

In a step S50, the controller 31 refers to the reference revolution speed computation table 31Ta, and computes the reference revolution speed Nr on the basis of the instruction signal Nd from the revolution speed dial 34. In the next step S80, the controller 31 refers to the predetermined time computation table 31Tb, and computes the predetermined time TD on the basis of the stored power level computed by the power storage controller 33a.

In the next step S100, the controller 31 determines whether or not the automatic stop switch 35 has been turned ON. When the automatic stop control ON signal is being output from the automatic stop switch 35, the controller 31 determines that the automatic stop switch 35 has been turned ON, and advances the processing to a step S110. When the automatic stop control ON signal is not being output from the automatic stop switch 35, the controller 31 determines that the automatic stop switch 35 has been turned OFF (has not been turned ON), and advances the processing to a step S140.

In the step S110, the controller 31 determines whether or not the operation devices 20 to 24 are in the non-operated state. When the maximum value of the operation pressure of the operation levers/pedals 20 to 24 is equal to or smaller than the determination pressure XMPa, the controller 31 determines that the operation devices 20 to 24 are in the non-operated state, and advances the processing to a step S120. When the maximum value of the operation pressure of the operation levers/pedals 20 to 24 is higher than the determination pressure XMPa, the controller 31 determines that the operation devices 20 to 24 are not in the non-operated state, and advances the processing to a step S135.

In the step S120, the controller 31 counts the elapsed time (duration time) T of the non-operated state, and advances the processing to a step S125. In the step S125, the controller 31 determines whether or not the predetermined time TD has elapsed with the non-operated state kept. When the elapsed time T counted up in the step S120 is equal to or longer than the predetermined time TD computed in the step S80, the controller 31 determines that the predetermined time TD has elapsed with the non-operated state kept, and advances the processing to a step S130. When the elapsed time T is shorter than the predetermined time TD, the controller 31 determines that the predetermined time TD has not elapsed with the non-operated state kept, and advances the processing to the step S140.

In the step S130, the controller 31 outputs the electrically driven motor stop command to the inverter 32, and ends the series of processing depicted in the flowchart of Fig. 6.

In the step S135, the controller 31 executes count reset processing to reset the elapsed time T to 0 (zero), and advances the processing to the step S140. In the step S140, the controller 31 outputs, to the inverter 32, the reference revolution speed command according to the reference revolution speed Nr computed in the step S50. Upon the end of the output processing of the reference revolution speed command (step S140), the processing is advanced to the step S50 for the next control cycle.

In Fig. 6, when the automatic stop switch 35 has not been turned ON and the automatic stop control is OFF (automatic stop function is disabled), the controller 31 repeats the processing in order of the steps S50 → S80 → S100 → S140. That is, the controller 31 continues to output the reference revolution speed command generated on the basis of the reference revolution speed, irrespective of the operation state of the operation levers/pedals 20 to 24. Due to this, the electrically driven motor 1 continues to revolve at the reference revolution speed Nr.

In a case in which the automatic stop switch 35 is switched to turn ON the automatic stop control (in a case in which the automatic stop function is enabled), the determination section 31c outputs the non-operation signal when all of the operation levers/pedals 20 to 24 are in a neutral state. Even when receiving the non-operation signal, the predetermined time counter 31e does not output the predetermined time count completion signal until the predetermined time TD computed on the basis of the stored power level elapses. Thus, the processing is repeated in order of the steps S50 → S80 → S100 → S110 → S120 → S125 → S140. Therefore, the controller 31 continues to output the reference revolution speed command generated on the basis of the reference revolution speed Nr. Due to this, the electrically driven motor 1 continues to revolve at the reference revolution speed Nr.

When the predetermined time TD has elapsed from a timing at which all of the operation levers/pedals 20 to 24 have become the neutral state, the predetermined time counter 31e outputs the predetermined time count completion signal. Due to this, the processing flows in order of the steps S50 → S80 → S100 → S110 → S120 → S125 → S130, and the controller 31 outputs the electrically driven motor stop command. This stops the revolution of the electrically driven motor 1.

The determination section 31c stops the output of the non-operation signal when at least one of the operation levers/pedals 20 to 24 is operated before the predetermined time TD elapses from the timing at which all of the operation levers/pedals 20 to 24 have become the neutral state. In this case, the processing flows in order of the steps S50 → S80 → S100 → S110 → S135 → S140. In the step S135, the predetermined time counter 31e resets the count. In the step S140, the reference revolution speed command section 31a outputs the reference revolution speed command generated on the basis of the reference revolution speed Nr. Thereafter, the controller 31 continues to output the reference revolution speed command by repeating the processing in the order of the steps S50 → S80 → S100 → S110 → S135 → S140. Due to this, the electrically driven motor 1 continues to revolve at the reference revolution speed Nr.

### -Operation-

Operation of the present embodiment is described below on the basis of the functional block diagram of the controller 31 depicted in Fig. 3 with reference to the flowchart depicted in Fig. 6.

The reference revolution speed command section 31a always computes the reference revolution speed Nr of the electrically driven motor 1 corresponding to the instruction signal Nd from the revolution speed dial 34 (step S50). The predetermined time computation section 31d always computes the predetermined time TD of the automatic stop control corresponding to the stored power level information of the power storage device 33 (step S80). When the automatic stop switch 35 has been turned ON, the automatic stop control ON signal is output from the automatic stop switch 35 (Yes in the step S100). When none of the operation levers/pedals 20 to 24 is being operated, the non-operation signal is output from the determination section 31c (Yes in the step S110).

When any of the operation levers/pedals 20 to 24 is operated before the elapsed time T of the non-operated state reaches the predetermined time TD, the maximum value of the operation pressure exceeds XMPa, and thus the output of the non-operation signal from the determination section 31c is stopped. In this case, the stop command section 31f determines that the automatic stop condition is not satisfied, and does not output the electrically driven motor stop command. Meanwhile, the reference revolution speed command section 31a generates the reference revolution speed command in such a manner as to regard the reference revolution speed Nr computed on the basis of the instruction signal Nd from the revolution speed dial 34 as the target revolution speed of the electrically driven motor 1, and outputs the reference revolution speed command to the inverter 32 (steps S50 → S80 → S100 → S110 → S135 → S140). Due to this, the revolution speed of the electrically driven motor 1 is controlled to coincide with the reference revolution speed Nr. In this state, the hydraulic fluid with a flow rate according to the reference revolution speed Nr is delivered from the hydraulic pumps P1, P2, and P3, and drives the actuators 12 to 19 in accordance with operation of the operation levers/pedals 20 to 24. Thus, desired work can be executed. Further, at this time, the count of the elapsed time T in the predetermined time counter 31e is reset.

Subsequently, when the operator has returned the operated operation lever/pedal 20 to 24 to the neutral state and all of the operation levers/pedals 20 to 24 have become an unoperated state, the non-operation signal is output from the determination section 31c again, and this non-operation signal is introduced to the predetermined time counter 31e. When receiving the non-operation signal from the determination section 31c, the predetermined time counter 31e starts a count. When the elapsed time T after the start of the count by the predetermined time counter 31e is equal to or shorter than the predetermined time TD computed in the predetermined time computation section 31d, the predetermined time count completion signal is not output from the predetermined time counter 31e. In this case, the stop command section 31f determines that the automatic stop condition is not satisfied, and does not output the electrically driven motor stop command. Thus, the inverter 32 continues to revolve the electrically driven motor 1 at the reference revolution speed Nr on the basis of the reference revolution speed command output from the reference revolution speed command section 31a (steps S50 → S80 → S100 → S110 → S120 → S125 → S140). At this time, when the operator operates any of the operation levers/pedals 20 to 24 again, the hydraulic pump P1, P2, or P3 delivers the hydraulic fluid with a flow rate in accordance with the operation, and the actuator can promptly be driven.

On the other hand, when the elapsed time T after the start of the count by the predetermined time counter 31e has exceeded the predetermined time TD computed in the predetermined time computation section 31d, the predetermined time count completion signal is output from the predetermined time counter 31e. In this case, the stop command section 31f determines that the automatic stop condition is satisfied, and outputs the electrically driven motor stop command. Due to this, the revolution speed of the electrically driven motor 1 lowers, and the electrically driven motor 1 is stopped (steps S50 → S80 → S100 → S110 → S120 → S125 → S130).

At this time, when the stored power level of the power storage device 33 is higher than the second threshold Eb, the first time Ta as the normal time length to the automatic stop control is computed, and transition to the automatic stop control is made after the elapse of the first time Ta.

On the other hand, when the stored power level of the power storage device 33 has decreased and is equal to or lower than the first threshold Ea, the second time Tb shorter than the first time Ta as the normal time length to the automatic stop control is computed, and transition to the automatic stop control is made after the elapse of the second time Tb.

Moreover, the predetermined time TD continuously decreases from the first time Ta to the second time Tb during decrease in the stored power level of the power storage device 33 from the second threshold Eb to the first threshold Ea.

To start the electrically driven motor 1 again after stop of the electrically driven motor 1 due to the automatic stop control, start operation of the starter switch (not depicted) is sufficient. As described above, the controller 31 according to the present embodiment drives the electrically driven motor 1 at a predetermined revolution speed when any of the plurality of operation devices 20 to 24 is being operated. Further, the controller 31 executes the automatic stop control to stop the revolution of the electrically driven motor 1 when the predetermined time TD has elapsed as the duration time of a state in which none of the plurality of operation devices 20 to 24 is operated. Moreover, when the stored power level of the power storage device 33 is equal to or lower than the first threshold Ea, the controller 31 sets the predetermined time TD shorter than that when the stored power level is higher than the first threshold Ea.

### -Effects-

In the present embodiment configured in this manner, in transition to the automatic stop control, when the stored power level of the power storage device 33 is equal to or lower than the first threshold Ea, the predetermined time TD is set shorter than that when the stored power level is higher than the first threshold Ea. Thus, the power consumption amount during the predetermined time TD is suppressed correspondingly, and decrease in the stored power level in the transition to the automatic stop control is suppressed when the stored power level has lowered to the first threshold Ea or lower. As a result, it is possible to allow the stored power level of the power storage device 33 to last for a long time and operate the hydraulic excavator for a long time with one time of charging.

Further, the predetermined time TD continuously decreases from the first time Ta to the second time Tb during decrease in the stored power level of the power storage device 33 from the second threshold Eb to the first threshold Ea. Thus, the predetermined time TD can be gradually changed without giving a sense of discomfort to the operator, and favorable operability can be obtained.

### <Modification 1>

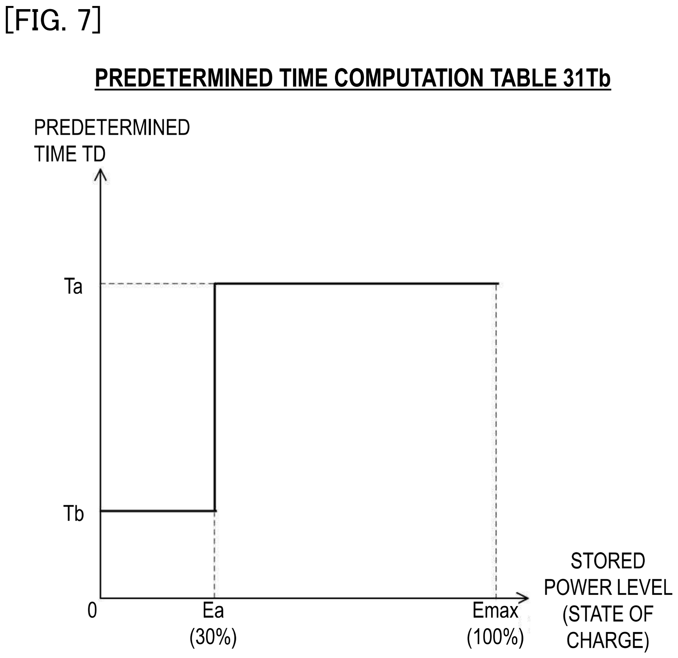

Fig. 7 is a diagram depicting another example of the relation between the stored power level and the predetermined time TD, set in the predetermined time computation table 31Tb.

In Fig. 7, in the predetermined time computation table 31Tb, the relation between the stored power level and the predetermined time TD is set such that the predetermined time TD is computed as follows. During decrease in the stored power level from the maximum stored power level Emax to the first threshold Ea, the predetermined time TD is constant at the first time Ta. When the stored power level further decreases from the first threshold Ea, the predetermined time TD decreases to the second time Tb in a stepwise manner, and is constant at the second time Tb after the decrease. Thus, the controller 31 according to the present modification computes the predetermined time TD that decreases in a stepwise manner when the stored power level decreases to the first threshold Ea or lower.

Also in the case in which the relation between the stored power level and the predetermined time TD is set in the predetermined time computation table 31Tb in this manner, in transition to the automatic stop control, when the stored power level of the power storage device 33 has decreased to the first threshold Ea or lower, the predetermined time TD becomes shorter than that when the stored power level is higher than the first threshold Ea, and the power consumption amount during the predetermined time TD is suppressed correspondingly. Thus, as with the above-described embodiment, it is possible to allow the stored power level of the power storage device 33 to last for a long time and operate the hydraulic excavator for a long time with one time of charging.

Moreover, in this modification, when the stored power level decreases to the first threshold Ea or lower, the predetermined time TD decreases from the first time Ta to the second time Tb in a stepwise manner. Thus, it is possible to cause the operator to become aware of a fact that the stored power level is close to such a level as to require charging, and it is possible to reduce the frequency of unintentional stop of the hydraulic excavator due to depletion of the power stored in the power storage device.

### <Modification 2>

In the above-described embodiment, the description has been given of the example in which start operation of the starter switch is required to be executed in order to revolve the electrically driven motor 1 again after the electrically driven motor 1 is stopped due to the automatic stop control. However, the present invention is not limited to this example. After the electrically driven motor 1 is stopped due to the automatic stop control, the electrically driven motor 1 may be revolved again when any of the operation devices 20 to 24 is operated.

### <Second Embodiment>

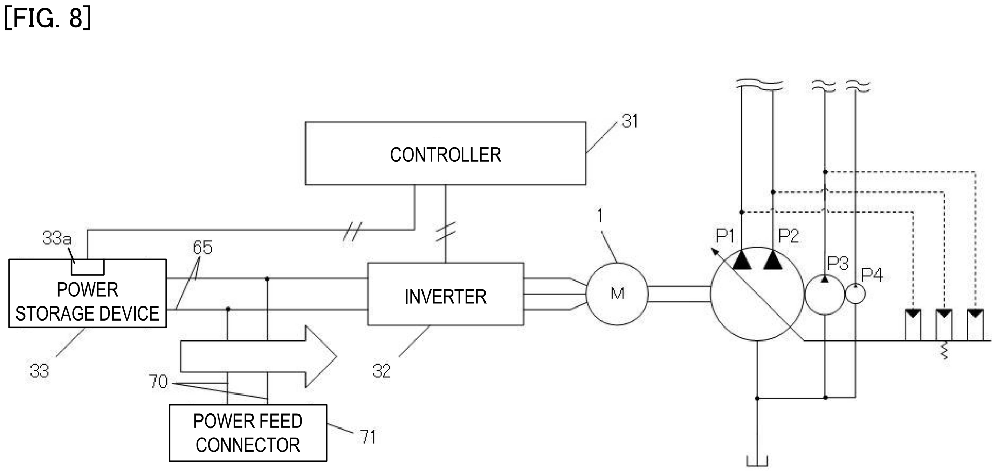

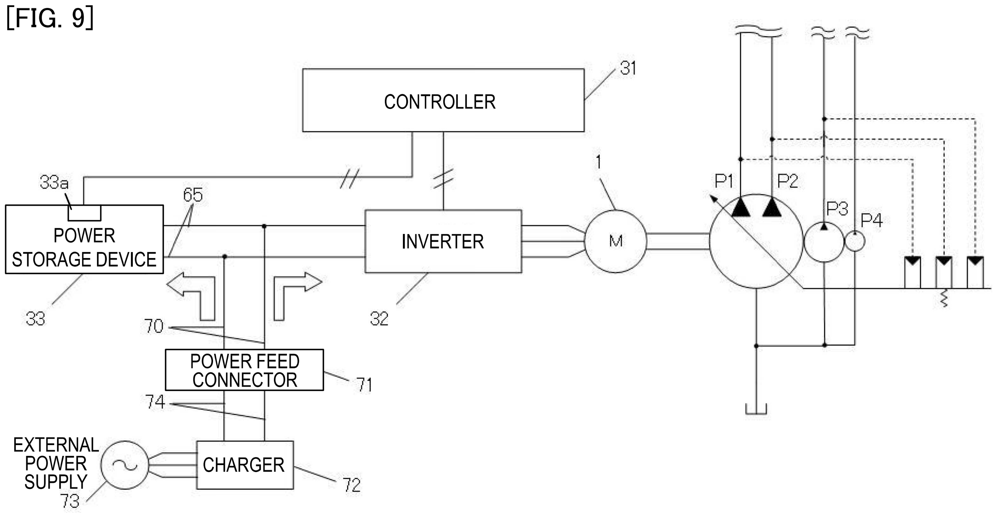

A second embodiment of the present invention is described with use of Figs. 8 and 9.

Figs. 8 and 9 are diagrams depicting a drive system of an electrically driven hydraulic excavator according to the second embodiment of the present invention. Fig. 8 depicts a case in which the electrically driven motor 1 is driven by power of the power storage device 33. Fig. 9 depicts a case in which the electrically driven motor 1 is driven while the power storage device 33 is charged by power of an external power supply.

In Figs. 8 and 9, the drive system of the present embodiment further includes a power feed connector 71 for connecting an external power supply 73 to the power supply line 65 through a charger 72. The charger 72 is connected to the power feed connector 71 through a power supply line 74. The power feed connector 71 is connected to the power supply line 65 through a power supply line 70.

In Fig. 8, the power storage device 33 is connected to the inverter 32 through the power supply line 65. Power of the power storage device 33 is supplied to the inverter 32 through the power supply line 65 as indicated by a blank arrow, and the electrically driven motor 1 is driven by the inverter 32.

When the power storage device 33 is charged, as depicted in Fig. 9, the power supply line 74 is connected to the power feed connector 71, and the external power supply 73 is connected to the power feed connector 71 through the charger 72. When, in this state, an operator executes activation operation for the hydraulic excavator (for example, operation of causing power to be supplied to an ACC system) by the starter switch of the hydraulic excavator, power of the external power supply 73 is supplied from the charger 72 to the power storage device 33 as indicated by one of two blank arrows. At this time, the charger 72 outputs a current depending on the stored power level (voltage) of the power storage device 33 to charge the power storage device 33. The charging ends when the voltage of the power storage device 33 has reached a set voltage.

Further, when start operation of the starter switch is executed to drive the electrically driven motor 1 during charging of the power storage device 33, as indicated by the other blank arrow, the inverter 32 receives a current required for driving of the electrically driven motor 1 from the charger 72. The power storage device 33 is charged by the remaining current of the charger 72, and the electrically driven motor 1 can be driven to execute work while the power storage device 33 is charged.

Moreover, as described in the first embodiment, when the stored power level of the power storage device 33 is equal to or lower than the first threshold Ea, the predetermined time TD until transition to the automatic stop control is made is the second time Tb shorter than the first time Ta. The power consumption of the electrically driven motor 1 driven during charging of the power storage device 33 is reduced by an amount corresponding to the shortening of the predetermined time TD. Thus, when the electrically driven motor 1 is driven while the power storage device 33 is charged, the reduced amount of the power consumption is allocated to the charging of the power storage device 33. Due to this, the time for charging the power storage device 33 can be shortened by an amount corresponding to the reduction in the power consumption of the electrically driven motor 1.

As described above, in the present embodiment, the electrically driven motor 1 can be driven while the power storage device 33 is charged by the external power supply 73 being connected to the power feed connector 71 through the charger 72.

Further, even when the electrically driven motor 1 is driven while the power storage device 33 is charged, the power consumption of the electrically driven motor 1 is reduced due to shortening of the predetermined time TD until transition to the automatic stop control is made. Thus, the time for charging the power storage device 33 can be shortened by an amount corresponding to the reduction in the power consumption of the electrically driven motor 1.

### <Others>

In the above embodiments, the case in which the electrically driven construction machine is a hydraulic excavator of the crawler type has been described. However, the electrically driven construction machine may be a construction machine other than the hydraulic excavator of the crawler type (for example, a hydraulic excavator of a wheel type, a hydraulic crane, a wheel loader, or the like).

Further, in the above-described embodiments, the description has been given of the case in which the drive system includes three pumps, i.e., the first hydraulic pump P1, the second hydraulic pump P2, and the third hydraulic pump P3. However, the number of hydraulic pumps may be one or two, and the present invention is applicable irrespective of the number of hydraulic pumps.

Moreover, in the above-described embodiments, the pressure sensors 36 to 43 are used to sense whether the operation lever or the operation pedal of the operation devices 20 to 24 is being operated. However, whether or not the operation lever or the operation pedal is being operated may be sensed by using a position sensor instead of the pressure sensor. Further, the plurality of pressure sensors 36 to 43 are used to sense whether the operation lever or the operation pedal of the operation devices 20 to 24 is being operated. However, a high pressure selection circuit that extracts the highest pressure among the operation pressures of the operation devices 20 to 24 and is formed of a combination of a plurality of shuttle valves may be disposed, and one pressure sensor that senses the extracted pressure thereof (highest pressure) may be disposed, and a sensing signal of this pressure sensor may be introduced to the controller 31. In this case, in the controller 31, it is sufficient to omit the maximum value selection section 31b in Fig. 3 and directly input the sensing signal of the pressure sensor to the determination section 31c.

### Description of Reference Characters

1: Electrically driven motor
3 to 5: Directional control valve
7 to 11: Directional control valve
20, 20a, 20b: Operation lever device (operation device)
21, 21a, 21b: Operation lever device (operation device)
22: Operation lever device (operation device)
23a, 23b, 24: Operation pedal device (operation device)
31: Controller
31a: Reference revolution speed command section
31b: Maximum value selection section
31c: Determination section
31d: Predetermined time computation section
31e: Predetermined time counter
31f: Stop command section
31Ta: Reference revolution speed computation table
31Tb: Predetermined time computation table
33a: Power storage controller
36 to 43: Pressure sensor
P1: Hydraulic pump
P2: Hydraulic pump
P3: Hydraulic pump
Nr: Reference revolution speed
TD: Predetermined time

## Claims

1. A drive system of an electrically driven construction machine, the drive system comprising:
an electrically driven motor;
a hydraulic pump driven by the electrically driven motor;
a plurality of actuators driven by a hydraulic fluid delivered from the hydraulic pump;
a plurality of operation devices for operating the plurality of actuators;
a power storage device that gives power to the electrically driven motor; and
a controller that controls a revolution speed of the electrically driven motor;
the controller executing automatic stop control to stop revolution of the electrically driven motor when a predetermined time has elapsed as a duration time of a state in which none of the plurality of operation devices is operated, wherein
the controller is configured to, when a stored power level of the power storage device is equal to or lower than a first threshold, set the predetermined time shorter than the predetermined time when the stored power level is higher than the first threshold.

2. The drive system of an electrically driven construction machine according to claim 1, wherein
the controller is configured to compute the predetermined time that continuously decreases, during decrease in the stored power level from a second threshold larger than the first threshold to the first threshold.

3. The drive system of an electrically driven construction machine according to claim 1, wherein
the controller is configured to compute the predetermined time that decreases in a stepwise manner, when the stored power level decreases to the first threshold or lower.
